# EUROPEAN PATENT APPLICATION

(11) **EP 3 098 467 A1**
(43) Date of publication of application: **30.11.2016**
(21) Application number: 15740447.6
(22) Date of filing: 16.01.2015
(51) Int. Cl.: F16C 33/66, F16C 19/16, F16N 7/38, F16N 9/02, F16N 13/00, F16N 29/00, F16N 29/02

(54) **ROLLER BEARING DEVICE**

(30) Priority: 21.01.2014 JP 2014008353
(71) Applicant: NTN Corporation, Osaka-shi, Osaka 550-0003 (JP)
(72) Inventor: MIZUTANI, Mamoru, Kuwana-shi Mie 511-0811 (JP)
(74) Representative: Grünecker Patent- und Rechtsanwälte PartG mbB
(86) International application number: PCT/JP2015/051040
(87) International publication number: WO 2015/111511

(57) **Abstract**

An object of the present invention is to make improvement on the shape of a bag 46a which provides the lubrication oil tank 46, so as to eliminate the need for an arc-shaped metal mold tailored to bearing size, and to allow effective use of a space for housing the lubrication oil tank in an annular housing even if a spacer has a large width.

A rolling bearing device 10 is a combination of a rolling bearing 11 and an oil supply unit 13 which includes at least: a lubrication oil tank 46 having a lubrication oil discharge port. The oil supply unit 13 is in a housing space inside a spacer 16 adjacent to the rolling bearing 11, and the housing space is between an inner ring 17 and an outer ring 18. The housing space for the lubrication oil tank has a width approximately equal to an axial width of the spacer and a circumferential length within a range of a center angle θ in an axial view of the spacer 16; and the lubrication oil tank 46 housed in the housing space is provided by a bag 46a which has a width approximately equal to an axial width of the housing space and a length approximately equal to A×π×(θ/360), where A represents a center diameter of the spacer.

## Description

### TECHNICAL FIELD

The present invention relates to rolling bearing devices used in machine tools, industrial machinery, etc., and particularly to a rolling bearing device constituted as a combination of a rolling bearing and an oil supply unit.

### BACKGROUND ART

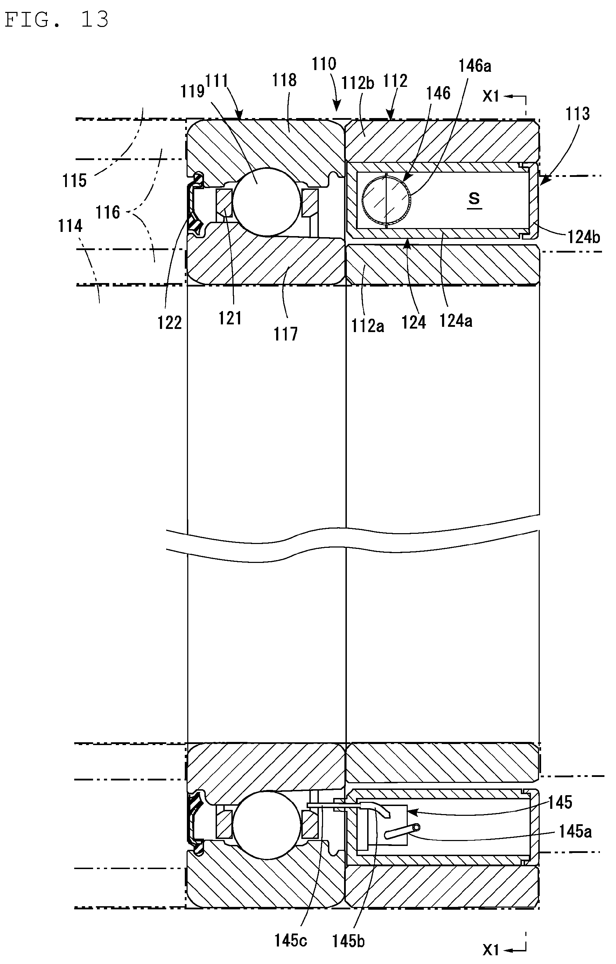

As an example of this type of device, a rolling bearing device 110 is shown in Fig. 13, which is composed of a rolling bearing 111; a spacer 112 contacted to an axial end thereof; and an oil supply unit 113 incorporated in the spacer 112 (Patent Literature 1).

The rolling bearing device 110 is assembled between a rotation shaft 114 and a housing 115 when utilized. The rolling bearing 111 has another end contacted by another spacer 116. Both of the spacers 112, 116 determine an axial position of the rolling bearing 111.

The rolling bearing 111 is provided by an angular contact ball bearing or a deep groove ball bearing, and includes: an inner ring 117 serving as a rotating track ring; an outer ring 118 serving as a fixed one; a predetermined number of rolling elements 119 placed between these track rings; and a retainer 121 which keeps these rolling elements 119 at a constant distance from each other. The rolling bearing 111 is pre-packed with a desirable type of grease, and an end on the spacer 116 side has a seal plate 122 attached thereto.

The spacer 112 includes an inner-ring-side spacer 112a and an outer-ring-side spacer 112b. The inner-ring-side spacer 112a is fitted in and fixed to the rotation shaft 114 side and is contacted onto an end surface of the inner ring 117. The outer-ring-side spacer 112b is fitted in and fixed to an inner diameter surface of the housing 115, and is contacted onto an end surface of the outer ring 118. The other spacer 116 is also fitted in and fixed to the rotation shaft 114 side and the housing 115 side in the same fashion, and is contacted onto the other end surfaces of the inner ring 17 and of the outer ring 118.

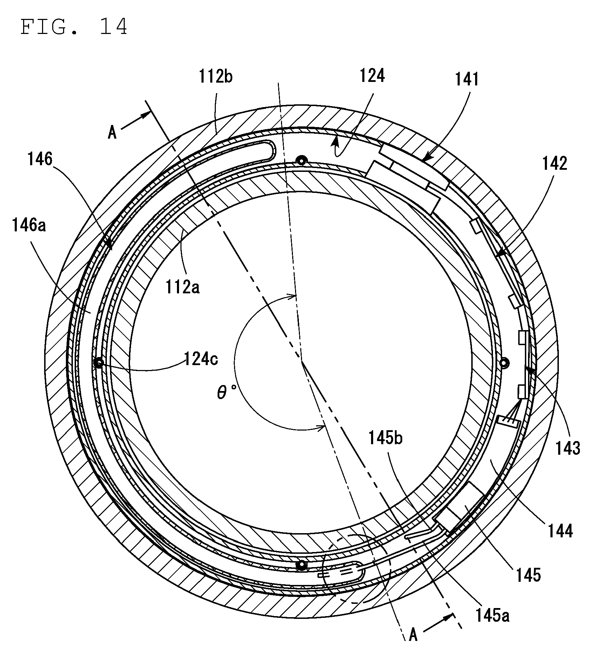

As shown in Fig. 14, the oil supply unit 113 includes an annular housing 124 and various components housed therein in a circumferential direction. The components include a generator section 141, a charging section 142, a controller 143, a driving section 144, a pump 145, a lubrication oil tank 146, and others.

### CITATION LIST

### PATENT LITERATURE

Patent Literature 1: JP-A 2013-60999 Gazette

### SUMMARY OF INVENTION

### TECHNICAL PROBLEM

The lubrication oil tank 146 is housed in a housing main body 124a, is provided by a bag, and is disposed in an arc shape along the annular housing 124.

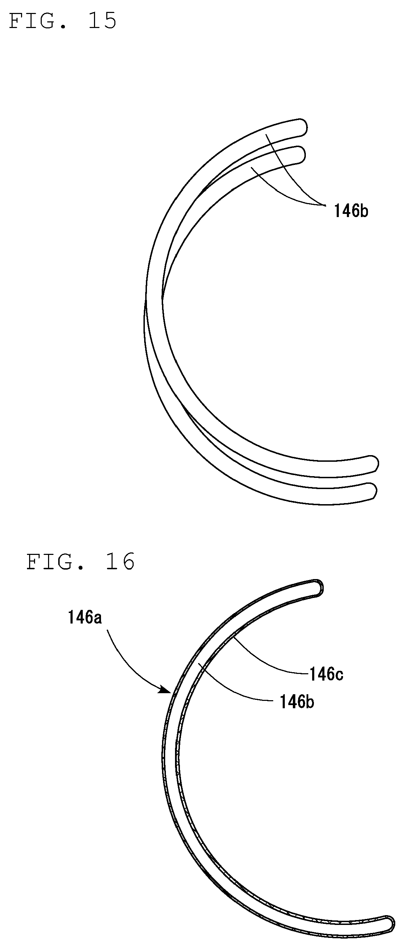

As shown in Fig. 15, the arc-shaped bag 146a is made, for instance, by first laminating two sheets 146b, 146b which are cut into an arc-like shape, and then as shown in Fig. 16, thermally welding an outer perimeter of the two mutually laminated sheets 146b, 146b. Note that the thermally welded region is indicated by a reference symbol 146c and is cross-hatched in Fig. 16.

In such a layout, in which the bag 146a is made of two sheets 146b, 146b each cut into an arc-like shape is disposed in the annular housing 124, there is a problem as shown in Fig. 13, if the spacer 112 has a large width, there is a large dead space S on an axial side of the lubrication oil tank 146 which is provided by the bag 146a. In other words, the housing space for the lubrication oil tank 146 in the annular housing 124 is not used effectively.

Another problem is that making the lubrication oil tank 146, i.e., the arc-shaped resin bag 146a, requires cutting of the sheets into the arc shape, and performing thermal welding, which requires an arc-shaped metal mold that follows a specific arc shape, for each of the bearing size.

It is therefore an object of the present invention to make improvement on the shape of the bag which provides the lubrication oil tank, so as to eliminate the need for the arc-shaped metal mold specific to the bearing size, and to allow effective use of the lubrication oil tank housing space in the annular housing even if the spacer has a large width.

### SOLUTION TO PROBLEM

In order to achieve the object described above, the present invention provides a rolling bearing device comprising a combination of a rolling bearing and an oil supply unit which includes at least: a lubrication oil tank having a lubrication oil discharge port, a pump; a driving section; an electric power source section; and a controller. The oil supply unit is between an inner ring and an outer ring of a spacer adjacent to the rolling bearing. In this device, a space for the lubrication oil tank in the oil supply unit has a width equal to an axial width of the spacer and is within a range of a center angle θ in an axial view of the spacer; and the lubrication oil tank in the oil supply unit is provided by a bag which has a width equal to an axial width of the spacer and a length equal to A×π×(θ/360), where A represents a center diameter of the spacer.

### ADVANTAGEOUS EFFECTS OF INVENTION

Since the lubrication oil tank is a rectangular, elastic bag which has approximately the same width as the axial width of the housing space and approximately the same length as the length given by A×π× (θ/360), where A represents a center diameter of the spacer, there is no dead space in the housing space, i.e., the housing space is effectively utilized.

Also, there is no need for a metal mold dedicated to a specific shape since the rectangular bag can be made, for example, by laminating two strip-like sheets and then bonding four perimeter sides of the laminated sheets straightly, or by folding a strip-like sheets which has two times the width of the spacer and then bonding three perimeter sides of the folded sheet straightly.

The bag which serves as the lubrication oil tank may be made of any material such as woven cloth of hemp for example; resin; woven cloth coated with resin or rubber, or others. However, resin is a preferred material due to its ease of handling and manufacture, as well as cost.

### BRIEF DESCRIPTION OF DRAWINGS

Fig. 1 is a sectional view taken in lines A-A in Fig. 3.
Fig. 2 is a partial sectional view taken in lines B-B in Fig. 3.
Fig. 3 is a sectional view of an oil supply unit taken in lines X1-X1 in Fig. 1.
Fig. 4 is a sectional view of a housing of the oil supply unit as another embodiment.
Fig. 5 (a) is a plan view showing a state where two strip-like resin sheets for formation of a resin bag to be used in the present invention are laminated to each other; Fig. 5 (b) is a plan view of the resin bag to be used in the present invention which is formed by thermally welding four perimeter sides of the mutually laminated two strip-like resin sheets.
Fig. 6 (a) is a plan view showing a state where a strip-like resin sheet for formation of a resin bag to be used in the present invention is two-folded; Fig. 6(b) is a plan view of the resin bag to be used in the present invention which is formed by thermally welding three perimeter sides of the two-folded sheet.
Fig. 7 is an enlarged view of a bag which is shown circled by an alternate long and two short dashes line in Fig. 3.
Fig. 8 is an enlarged sectional view showing an example of an electric power source section of the oil supply unit.
Fig. 9 is an enlarged sectional view showing an example of the electric power source section of the oil supply unit.
Fig. 10 is an enlarged sectional view showing an example of the electric power source section of the oil supply unit.
Fig. 11 is an enlarged sectional view showing an example of the electric power source section of the oil supply unit.
Fig. 12 is a detailed block diagram of a driving section.
Fig. 13 is a sectional view of a conventional rolling bearing device taken in lines A-A in Fig. 14.
Fig. 14 is a sectional view of a conventional oil supply unit taken in lines X1-X1 in Fig. 13.
Fig. 15 is a plan view showing a state where two arc-like resin sheets for formation of a resin bag to be used in a conventional bearing are laminated to each other.
Fig. 16 is a plan view of a conventional resin bag formed by thermally welding a perimeter of two, mutually laminated arc-shaped resin sheets.

### DESCRIPTION OF EMBODIMENTS

Hereinafter, embodiments of the present invention will be described based on the attached drawings.

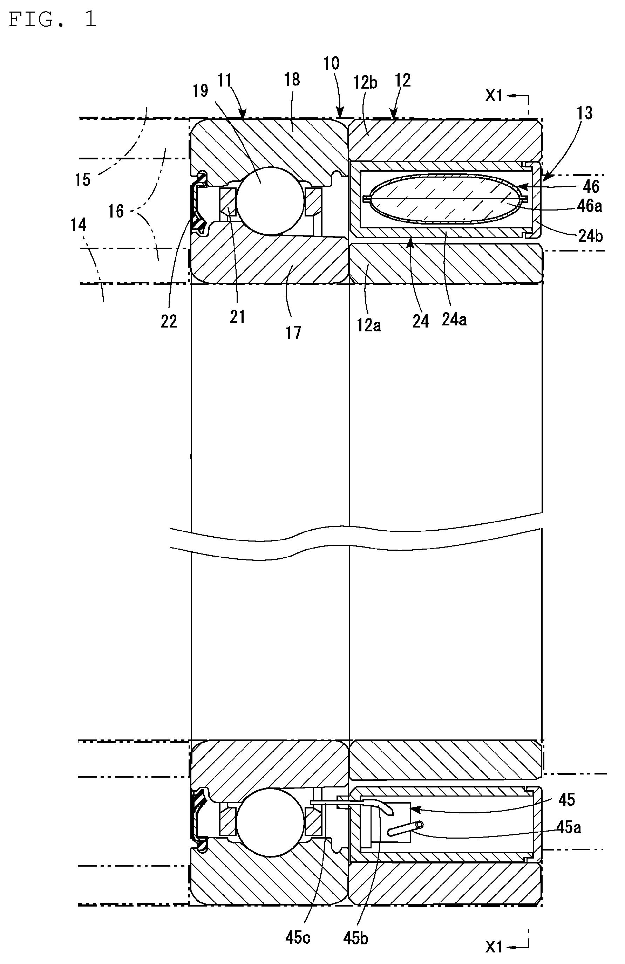

A rolling bearing device 10 according to an embodiment shown in Fig. 1 through Fig. 3 includes a rolling bearing 11; a spacer 12 contacted onto an axial end of the rolling bearing; and an oil supply unit 13 incorporated in the spacer 12; and when used, is assembled into a space between a rotation shaft 14 and a housing 15. The rolling bearing 11 has another end, on which another spacer 16 is contacted. These two spacers 12, 16 provide axial positioning of the rolling bearing 11. The rotation shaft 14 in this embodiment is horizontal.

The rolling bearing 11 may be provided by whichever of an angular contact ball bearing and a deep groove roller bearing, and includes a rotation-side track ring provided by an inner ring 17; an outer ring 18 on a fixed side; a predetermined number of rolling elements 19 placed between these track rings; and a retainer 21 which keeps a predetermined distance between the rolling elements 19. The rolling bearing 11 is pre-packed with desirable grease, and a seal plate 22 is attached to an end on the spacer 16 side.

The spacer 12 includes an inner-ring-side spacer 12a and an outer-ring-side spacer 12b. The inner-ring-side spacer 12a is fitted in and fixed to the rotation shaft 14 side and is contacted onto an end surface of the inner ring 17. The outer-ring-side spacer 12b is fitted in and fixed to an inner diameter surface of the housing 15, and is contacted onto an end surface of the outer ring 18. The other spacer 16 is also fitted in and fixed to the rotation shaft 14 side and the housing 15 side in the same fashion, and is contacted onto the other end surfaces of the inner ring 17 and of the outer ring 18.

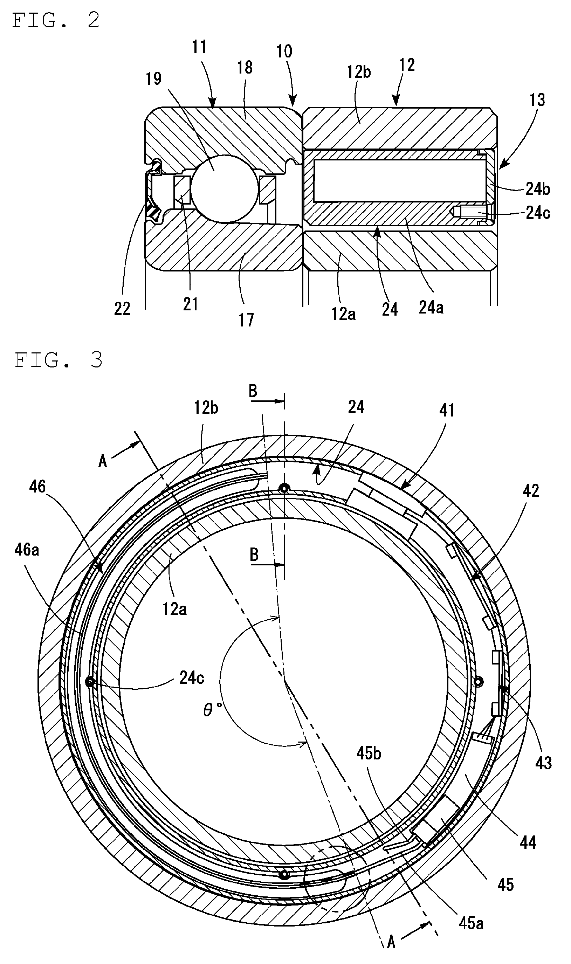

As shown in Fig. 3, the oil supply unit 13 includes an annular housing 24 and various components housed therein in a circumferential direction. The components include a generator section 41, a charging section 42, a controller section 43, a driving section 44, a pump 45, a lubrication oil tank 46 and so on.

As shown in Fig. 2, the annular housing 24 of the oil supply unit 13 is an assembly of a housing main body 24a which has a generally U-shaped section with an open end facing away from the rolling bearing 11; and a lid 24b which closes the open end of the housing main body 24a and is detachable from/attachable to the housing main body 24a. The housing main body 24a and the lid 24b are made of the same thermally plastic resin material such as PPS.

The lid 24b of the housing 24 is fixed to the housing main body 24a using screws 24c. By unscrewing the screws 24c and removing the lid 24b, it becomes possible to replenish the lubrication oil tank 46 housed inside the housing main body 24a with lubrication oil, without removing the entire oil supply unit 13.

The housing main body 24a has its outer circumferential surface adhesively fixed to an inner diameter surface of the outer-ring-side spacer 12b. The adhesive for fixing the housing main body 24a may be provided by epoxy resin for example.

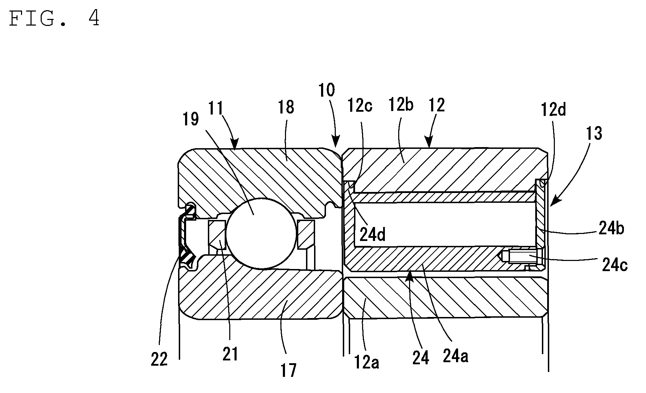

Fig. 4 shows an embodiment in which the housing 24 is fixed to the inner diameter surface of the outer-ring-side spacer 12b without using an adhesive.

In this example in Fig. 4, a pair of recesses 12c, 12d receding in an outer diameter direction are formed on both axial sides of an inner diameter surface of the outer ring-side spacer 12b; the housing main body 24a has an outer diameter surface on the rolling bearing 11 side, where there is formed a ridge 24d to fit into the recess 12c, and this ridge 24d is fitted into the recess 12c; the other recess 12d is fitted by an outer diameter portion of the lid 24b which is fixed to the housing main body 24a with the screws 24c, so that the lid 24b is screw-fixed to the housing main body 24a by the screws 24c. Thus, the inner diameter surface of the outer ring-side spacer 12b is sandwiched by the ridge 24d of the housing main body 24a and the outer diameter portion of the lid 24b, thereby fixing the housing 24 to the inner diameter surface of the outer ring-side spacer 12b, without using an adhesive.

Next, the lubrication oil tank 46 inside the housing main body 24a is provided by a bag 46a of an elastic resin, and is disposed in an arcuate form along the annular housing 24.

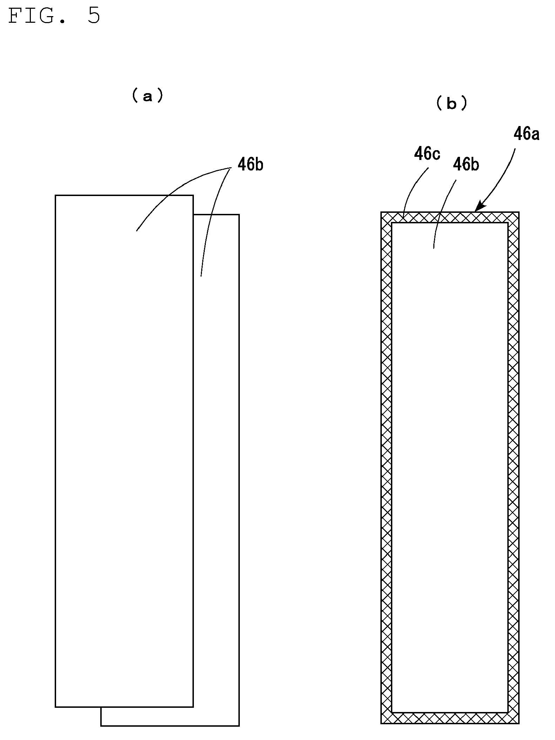

As shown in Fig. 5(a), for example, the resin bag 46a can be made by first laminating two strip-like resin sheets 46b, 46b each having an approximately the same width as a width L of the housing main body 24a and the same length as a circumferential length of a housing space for the bag 46a in the housing main body 24a, the length specifically being given by A×π× (θ/360), where A representing a center diameter of the spacer 12, and θ representing a center angle (θ°) of the pacer 12 of the housing space for the bag 46a; and then thermally welding four outer perimeter sides of the sheets straightly as shown in Fig. 5(b). A reference symbol 46c indicates the thermally welded region.

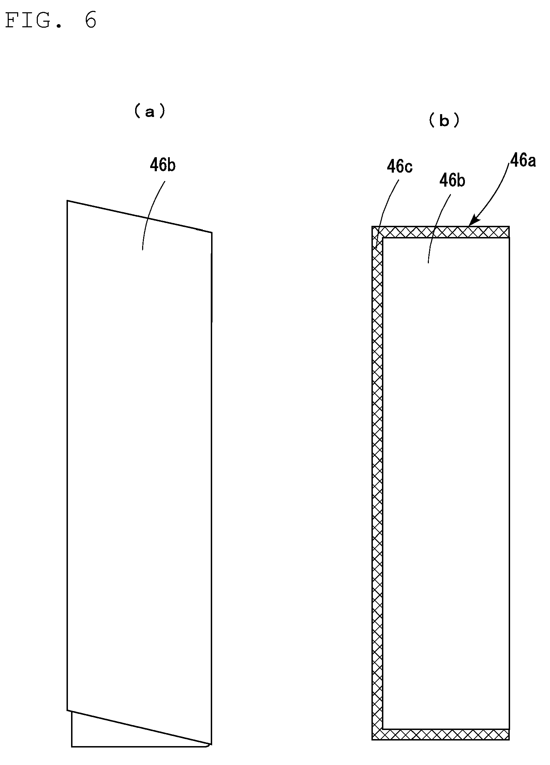

Fig. 6 (a) shows another example: A strip-like resin sheet 46b, having a width which is two times the width L of the housing main body 24a is two-folded, and then as shown in Fig. 6(b), three perimeter sides are thermally welded straightly.

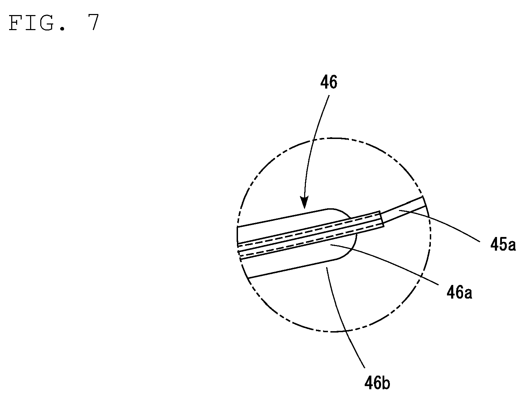

As shown enlarged in Fig. 7, the bag 46a is provided with a suction tube 45a which leads to the pump 45. The suction tube 45a can be integrated with the bag 46a by sandwiching the tube between two sheets of resin for forming the bag 46a and then performing the thermal welding to complete the bag 46a.

The bag 46a which constitutes the lubrication oil tank 46 can be formed of such a material as polyamide (for example, polyamide 11 and polyamide 12), fluorine-containing rubber (FKM), polyamide elastomer, polyethylene, polyester and polypropylene. There is no specific limitation to the material as far as the material is compatible with lubrication oil stored in the bag 46a.

The suction tube 45a which is provided in the bag 46a of the lubrication oil tank 46 is preferably detachable from the pump 45. The suction tube 45a which is detachable from the pump 45 allows the suction tube 45a to be removed from the pump 45 for replenishing lubrication oil from the suction tube 45a into the bag 46a when lubrication oil level becomes low in the lubrication oil tank 46.

Also, the bag 46a which is detachable from the pump 45 allows such a replacement system that lubrication oil is loaded in a replacement bag 46a, and when there is no more lubrication oil left in the original bag 46a, then the used bag 46a is taken out and is replaced with the replacement bag 46a. In this way, replenishing lubrication oil can be finished within a short time. Since the replacement bag 46a can be loaded with lubrication oil under a controlled environment at a lubrication oil manufacturing plant, it is possible to reduce such a risk as foreign matter inclusion in the bag 46a at the time of loading oil. It should be noted here that a lid should desirably be placed to the suction tube 45a of the replacement bag 46a in order to prevent foreign matter inclusion during storage.

Lubrication oil which is loaded in the lubrication oil tank 46 desirably has a viscosity of VG22 for example, since an excessively high viscosity will bear too much burden on the pump and the power source.

In each embodiment described thus far, the annular housing 24 houses the generator section 41, the charging section 42, the controller 43, the driving section 44, the pump 45, and so on in the circumferential direction, in addition to the lubrication oil tank 46.

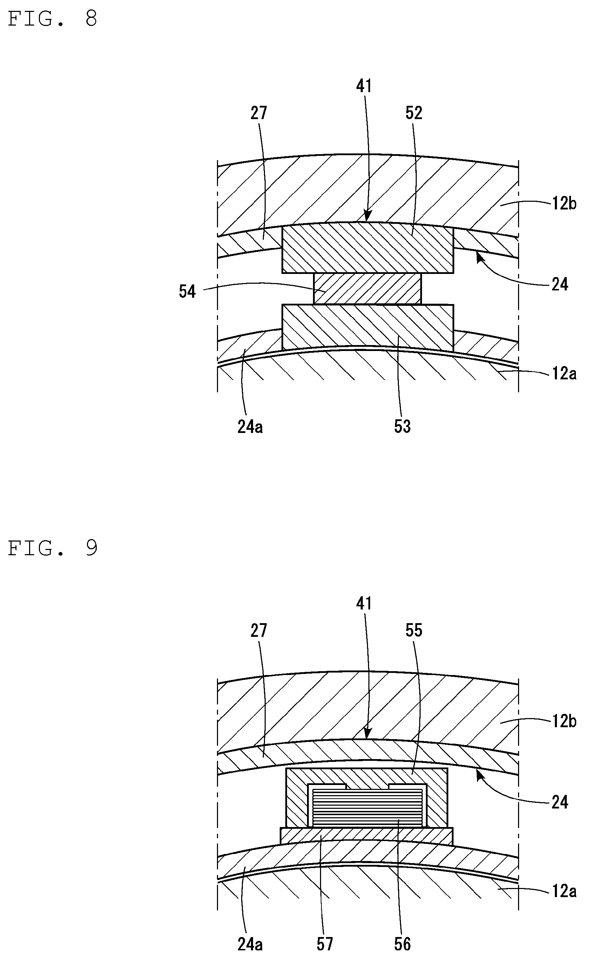

As shown in Fig. 8, the generator section 41 may be provided by, for example, one which generates electric power by way of Seebeck effect. Specifically, when the rolling bearing device 10 is operating, temperature of the inner ring 17 and the outer ring 18 increases due to friction heat with the rolling elements 19 (see Fig. 1). In general configuration, the outer ring 18 is assembled into the housing 15 of the machine it serves, and therefore loses heat by thermal conduction, resulting in temperature difference between the inner ring 17 and the outer ring 18. Different temperatures conducted to the respective heat conductors 52, 53 cause the Seebeck element 54 to have temperature difference between its two end surfaces, causing the element to generate electric power according to the Seebeck effect.

When using the above configuration where heat conductors 52, 53 are provided to penetrate the inner circumferential surface and the outer circumferential surface of the housing main body 24a respectively and a Seebeck element 54 is placed between these heat conductors 52, 53, an adhesive having good heat conductivity should desirably be used on a surface where the heat conductor 52 which penetrates the outer circumferential surface of the housing main body 24a makes contact with the inner diameter surface of the outer ring side spacer 12b. It should be noted here that the heat conductor 52 which is on the outer ring side has an outer diameter equal to an inner diameter of the outer ring spacer 12b and is fitted thereto for improved heat release. On the other hand, the heat conductor 53 which is on the inner ring side has its inner diameter surface not in contact with the inner ring spacer 12a. If possible, it is desirable that the outer ring-side and the inner ring-side heat conductors 52, 53 have the same volume.

Preferably, thermal grease, for example, should be applied between the inner diameter surface of the outer-ring-side spacer 12b and the heat conductor 52; between the heat conductor 52 and the Seebeck element 54; and between the Seebeck element 54 and the inner-ring-side heat conductor 53, for improved contact and heat conductivity. Thermal grease generally contains silicone as a primary ingredient. The heat conductors 52, 53 should be made of a metal which has a high heat conductivity rate. For example, silver, copper, gold, etc. are good candidates, among which copper is the most common due to cost reasons. In addition, copper alloys which contain copper as a primary ingredient can also be used. Further, sintered bodies containing copper as a primary ingredient are also usable.

In addition to those which generate electric power by way of Seebeck effect as described above, the generator section 41 can also be provided by any of those shown in Fig. 9, Fig. 10 and Fig. 11.

The one in Fig. 9 is applicable when there is an alternating magnetic field inside the rolling bearing device 10. Inside built-in spindles of machine tools, or near a high-frequency apparatus which handles a large amount of electric power, there is leakage magnetic flux or high-frequency radiation. This leakage flux is utilized to generate electric power by way of electromagnetic induction. Specifically, an iron core 55 which has an E-shaped profile with one of its sides open is combined with a coil 56 to catch the alternating magnetic field efficiently to generate power by way of electromagnetic induction. The open surface of the iron core 55 is provided with an insulating base 57. If the leakage flux has a known frequency, then the iron core 55 may be eliminated while the coil 56 is configured to resonate with the frequency of the leakage flux.

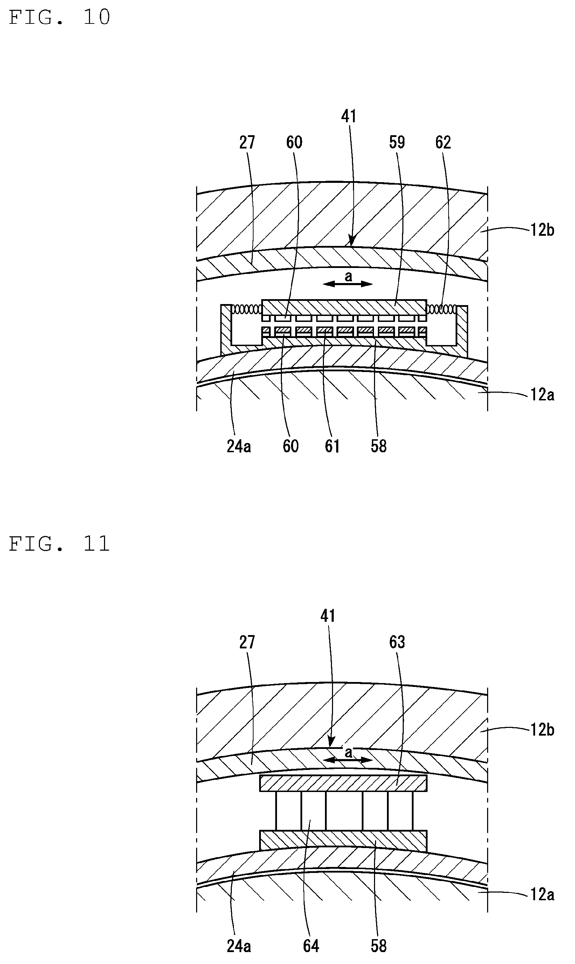

The one shown in Fig. 10 is applicable when there is vibration inside the rolling bearing device 10. Specifically, a fixed-side insulation substrate 58 is opposed by a moving-side insulation substrate 59, with each of the substrates being formed with a large number of electrodes 60 and only the electrodes 60 on the fixed-side insulation substrate 58 being laminated with electrets 61 to oppose to the electrodes 60 on the moving-side insulation substrate 59, with a gap. The moving-side insulation substrate 59 is movable in only one direction indicated by Arrow "a" in the drawing, by a mover 62.

When there is vibration in the rolling bearing device 10, the mover 62 causes the moving-side insulation substrate 59 to oscillate in the direction indicated by Arrow "a". This generates electric charge between the electrodes 60 due to electrostatic induction caused by relative movement between the fixed-side insulation substrate 58 and the moving-side insulation substrate 59 and the electrets 61. The generated charge is tapped for use as electric power.

The one shown in Fig. 11 is applicable also when there is vibration inside the rolling bearing device 10. Specifically, an elastic sheet of piezoelectric body 64 is disposed between a fixed-side insulation substrate 58 and a weight 63. When there is vibration in the rolling bearing device 10, interaction between the weight 63 and the piezoelectric body 64 causes the weight 63 to vibrate in a direction indicated by an arrow "a". In this process, the piezoelectric body 64 is twisted, generating electromotive force based on dielectric polarization. The electromotive force is tapped for use as electric power.

Electric charge generated by the generator section 41 is stored in the charging section 42 which may be provided by a battery, capacitor, etc. If a capacitor is employed, an electric double layer condenser (capacitor) is desirably used.

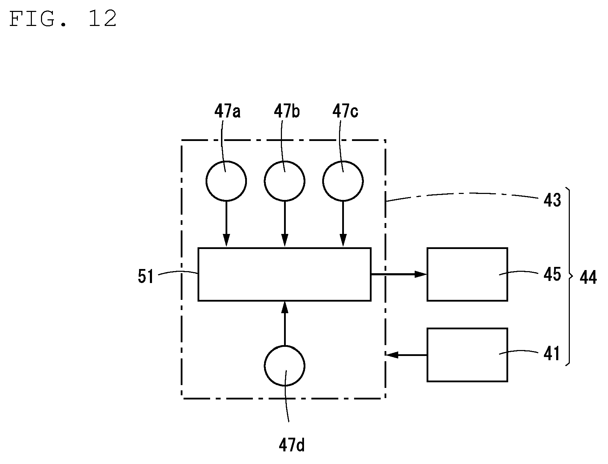

As shown in Fig. 12, the driving section 40 has sensors such as a bearing temperature sensor 47a, a bearing rotation sensor 47b, a lubrication oil quantity sensor 47c, and a lubrication oil temperature sensor 47d. Signals from these sensors are inputted to a CPU 51, which then automatically controls the pump 45 in accordance with temperature and rotation status of the rolling bearing 11, thereby controlling the amount of lubrication oil supply.

The pump 45 has a suction tube 45a which sucks lubrication oil from the lubrication oil tank 46; and a discharge tube 45b from which the sucked lubrication oil is discharged. The discharge tube 45b has a discharge nozzle 45c at its tip, from which lubrication oil is supplied to between the fixed-side track ring and the rotation-side track ring of the rolling bearing 11.

For example, the pump 45 is driven whenever the electric power stored in the capacitor of the charging section 42 has attained a predetermined voltage. If power charge time is too short in relation to power generation efficiency, the power may be discharged to a resistor for example, upon a time when a predetermined power storage voltage has been reached, thereby introducing an interval in the operation timing of the pump 45. In this case, there are cycles of charging and discharging before the pump 45 is operated. The number of this charge-discharge cycles can be used in controlling the operation interval of the pump 45. Alternatively, a timer function may be used to trigger when the power storage voltage is reached a predetermined value, to provide an interval in the operation cycle of the pump 45. In this case, the above-described charge-discharge cycle is not repeated.

The suction tube 45a, which is connected to the suction side of the pump 45, extends into the lubrication oil tank 46 to suck lubrication oil stored in the lubrication oil tank 46.

On the other hand, the discharge tube 45b which is connected to the discharge side has its tip connected to a discharge nozzle 45c for discharging lubrication oil into the rolling bearing. It is desirable that the discharge nozzle 45c has its tip disposed at a location between the inner and the outer rings of the bearing, closely to the inner ring's outer circumferential surface. The discharge nozzle 45c has a nozzle hole of an appropriate inner diameter based on a relationship between surface tension due to base oil viscosity and the amount of discharge.

It should be noted here that the above embodiment is an example of inner ring rotation. Also, it has a horizontal rotation axis; however, the axis may be vertical. Further, it may be incorporated in a machine tool spindle.

### REFERENCE SIGNS LIST

- 10: : Rolling Bearing Device
- 11: : Rolling Bearing
- 12: : Spacer
- 12a: : Inner Ring Side Spacer
- 12b: : Outer Ring Side Spacer
- 12c: : Recess
- 12d: : Recess
- 13: : Oil Supply Unit
- 14: : Rotation Shaft
- 15: : Housing
- 16: : Spacer
- 17: : Inner Ring
- 18: : Outer Ring
- 19: : Rolling Element
- 21: : Retainer
- 22: : Seal Plate
- 24: : Housing
- 24a: : Housing Main Body
- 24b: : Lid
- 24c: : Screw
- 24d: : Ridge
- 40: : Driving Section
- 41: : Generator Section
- 42: : Charging Section
- 43: : Controller
- 44: : Driving Section
- 45: : Pump
- 45a: : Suction Tube
- 45b: : Discharge Tube
- 45c: : Discharge Nozzle
- 46: : Lubrication Oil Tank
- 46a: : Bag
- 46b: : Resin Sheet
- 46c: : Thermally Welded Portion
- 47a: : Bearing Temperature Sensor
- 47b: : Bearing Rotation Sensor
- 47c: : Lubrication Oil Quantity Sensor
- 47d: : Lubrication Oil Temperature Sensor
- 51: : CPU
- 52: : Heat Conductor
- 53: : Heat Conductor
- 54: : Seebeck Element
- 55: : Iron Core
- 56: : Coil
- 57: : Insulation Base
- 58: : Fixed-Side Insulation Substrate
- 59: :Moving-Side Insulation Substrate
- 60: :Electrodes
- 61: :Electrets
- 62: : Mover
- 64: : Piezoelectric Body

## Claims

1. A rolling bearing device comprising a combination of a rolling bearing and an oil supply unit which includes at least: a lubrication oil tank having a lubrication oil discharge port, a pump; a driving section; an electric source section; and a controller; the oil supply unit being between an inner ring and an outer ring of a spacer adjacent to the rolling bearing; wherein a space for the lubrication oil tank in the oil supply unit has a width equal to an axial width of the spacer and is within a range of a center angle θ in an axial view of the spacer; and the lubrication oil tank in the oil supply unit is provided by a bag which has a width equal to an axial width of the spacer and a length equal to A×π× (θ/360), where A represents a center diameter of the spacer.

2. The rolling bearing device according to Claim 1, wherein the bag which constitutes the lubrication oil tank is provided by a rectangular, elastic bag.

3. The rolling bearing device according to Claim 2, wherein the bag which constitutes the lubrication oil tank is made by first laminating two rectangular resin sheets each other, and then welding perimeter regions.

4. The rolling bearing device according to Claim 2, wherein the bag which constitutes the lubrication oil tank is made by first folding a rectangular resin sheet, causing one half thereof placed on the other half, and then welding three perimeter sides.

5. The rolling bearing device according to one of Claims 1 through 4, wherein the sheets for forming the bag are welded to each other with a suction tube sandwiched therebetween for connection of the lubrication oil tank and a pump with each other.
